# EUROPÄISCHE PATENTANMELDUNG

(11) **EP 2 070 604 A1**
(43) Veröffentlichungstag der Anmeldung: **17.06.2009**
(21) Anmeldenummer: 08017633.2
(22) Anmeldetag: 08.10.2008
(51) Int. Cl.: B07C 3/00, G07B 17/00

(54) **Verfahren und System zum Bearbeiten von Postsendungen**

(30) Priorität: 07.12.2007 DE 102007059327
(71) Anmelder: Deutsche Post AG, 53113 Bonn (DE)
(72) Erfinder: Lang, Jürgen, Dr., 51429 Bergisch Gladbach (DE); Meyer, Bernd, 53639 Königswinter (DE)
(74) Vertreter: Jostarndt, Hans-Dieter

(57) **Zusammenfassung**

Die Erfindung betrifft ein Verfahren und ein System zum Bearbeiten einer Postsendung, wobei das Verfahren folgende Schritte umfasst:
- die Postsendung (1) wird in einen Bearbeitungsverlauf von Postsendungen eingeliefert,
- auf der Oberfläche der Postsendung (1) befindliche graphische Informationen werden an einer Bearbeitungseinheit (4) erfasst,
- ein Datensatz mit Daten zur Identifizierung der Postsendung (1), insbesondere mit einer Sendungsnummer, wird unter Berücksichtigung der an der Bearbeitungseinheit (4) erfassten Informationen angelegt oder verändert,
- der Datensatz mit den Daten zur Identifizierung der Postsendung wird mit den auf der Oberfläche der Postsendung befindlichen erfassten graphischen Informationen auf einer mit dem Nutzerterminal (2) und der Bearbeitungseinheit (4) verbundenen Serverplattform (5) hinterlegt, und der Datensatz oder Teile davon werden einem Nutzer (6, 10) zur Verfügung gestellt.

Die Erfindung betrifft ferner einen Netzwerkknoten und ein System zur Durchführung des Verfahrens.

## Beschreibung

Die Erfindung betrifft ein Verfahren und ein System zum Bearbeiten von Postsendungen.

Derzeit können Postsendungen, insbesondere mit Zusatzleistungen wie Versendung als Einschreiben, in Kundenfilialen eingeliefert werden und dort eine Sendungsnummer erhalten, die dem Kunden, in der Regel dem Einlieferer, mitgeteilt wird. Die Sendungsnummer ermöglicht eine Sendungsverfolgung im Internet. Dabei gibt ein Kunde die Sendungsnummer auf einer entsprechenden Webseite ein und kann den Sendungsstatus einer Postsendung einsehen, beispielsweise den Status "eingeliefert" oder den Status "zugestellt". Geschäftskunden können darüber hinaus auch über einen persönlichen Zugang den Status mehrerer von ihnen eingelieferter Postsendungen einsehen.

Als Nachteil der bekannten Verfahren erweist es sich, dass nur eine Sendungsnummer und ein zugehöriger Sendungsstatus für einen Kunden einsehbar sind. Die für den Kunden relevante Empfängeradresse, die in der Regel vom Kunden zur Identifizierung einer Postsendung herangezogen wird, wird nicht angezeigt, d.h. ein Kunde muss sich die zur Sendungsnummer gehörige Empfängeradresse notieren, was für ihn umständlich und zeitaufwändig ist. Wird die zugehörige Empfängeradresse von ihm nicht notiert, kann er den Status der Postsendung nicht mehr über die ihm zur Verfügung gestellte Webseite ermitteln.

Aus dem Stand der Technik sind verschiedene Verfahren und Systeme zum Kategorisieren und/oder Nachverfolgen von Postsendungen bekannt. Aus der US-Patentschrift 5 229 932 gehen ein Verfahren und eine Vorrichtung zum Kategorisieren und Verifizieren von Postsendungen hervor. Für eingelieferte Massensendungen werden die Klasse, die Anzahl, die Größe sowie das Gewicht der Sendungen erfasst, und es wird der in der Adresse enthaltene ZIP-Code gelesen, um die geographische Zielregion und die Lesbarkeit des Adressblocks zu bestimmen und die Adresse zu verifizieren. Alte Angaben werden gespeichert, und es wird ein Bericht erstellt, der neben den erfassten Angaben auch das daraus ermittelte Porto enthält. Dieser Bericht wird mit den Einlieferungsangaben des Kunden verglichen, wobei insbesondere das Porto verifiziert wird.

Die US-Patentschrift 4 821 195 offenbart ein Verfahren und eine Vorrichtung zur sequenziellen Nummerierung von Postsendungen. Zur Frankierung von Postsendungen erhält der Kunde eines Postunternehmens einen Portobetrag, wobei das Porto zusammen mit einer Transaktionsnummer übermittelt wird. Die Sendungen werden mit dem Porto, der Transaktionsnummer und einer fortlaufenden Nummer versehen, und für eine Massensendung wird ein Bericht gedruckt, der das Gesamtporto und die Anzahl der enthaltenen Sendungen beinhaltet. Anhand der Transaktionsnummer und der fortlaufenden Nummerierung lässt sich erkennen, ob die Postsendungen gültige Frankierungen aufweisen.

Der Erfindung liegt die Aufgabe zugrunde, einem Nutzer eines Postdienstleisters die Möglichkeit einzuräumen, den Status einer Postsendung zusammen mit weiteren, für ihn relevanten Daten, vorzugsweise über das Internet, zu überwachen.

Erfindungsgemäß wird die Aufgabe durch ein Verfahren mit den Merkmalen des Anspruchs 1 gelöst. Ferner wird die Aufgabe gelöst durch einen Netzwerkknoten nach Anspruch 12 und ein System nach Anspruch 13.

Weiterbildungen der Erfindung sind Gegenstand der Unteransprüche 2 bis 11.

Das erfindungsgemäße Verfahren zum Bearbeiten einer Postsendung umfasst die folgenden Schritte:
- die Postsendung wird in einen Bearbeitungsverlauf von Postsendungen eingeliefert,
- auf der Oberfläche der Postsendung befindliche graphische Informationen werden an einer Bearbeitungseinheit erfasst,
- ein Datensatz mit Daten zur Identifizierung der Postsendung, insbesondere mit einer Sendungsnummer, wird unter Berücksichtigung der an der Bearbeitungseinheit erfassten Informationen angelegt oder verändert,
- der Datensatz mit den Daten zur Identifizierung der Postsendung wird mit den auf der Oberfläche der Postsendung befindlichen erfassten graphischen Informationen auf einer mit dem Nutzerterminal und der Bearbeitungseinheit verbundenen Serverplattform hinterlegt, und der Datensatz oder Teile davon werden einem Nutzer zur Verfügung gestellt.

Ferner ist es zweckmäßig, dass der Datensatz mit den Daten zur Identifizierung der Postsendung bei Einlieferung der Postsendung in dem Bearbeitungsverlauf angelegt oder verändert wird.

Eine Ausführungsform der Erfindung sieht vor, dass der Datensatz mit den Daten zur Identifizierung der Postsendung in einer Bearbeitungseinheit für Postsendungen angelegt oder verändert wird.

Bei der Bearbeitungseinheit handelt es sich beispielsweise um eine Aufstellmaschine, eine Sortiermaschine oder eine Entgeltüberprüfungseinheit.

Eine Aufstellmaschine ist insbesondere eine Vorrichtung, die geeignet ist, Postsendungen so anzuordnen, dass sie auf besonders einfache und zuverlässige Weise in einen Bearbeitungsvorgang einer nachfolgenden weiteren Bearbeitungseinheit eingebracht werden können. Beispielsweise handelt es sich bei der Aufstellmaschine um eine Vorrichtung, welche mehrere Postsendungen - vorzugsweise in gleicher Größe - hintereinander aufstellt. Gegebenenfalls kann hierbei ein Wenden der Postsendung erfolgen, so dass die Oberflächen der Postsendungen, auf denen sich graphische Informationen befinden, gleiche Orientierung aufweisen.

Ferner ist es möglich, dass es sich bei der Bearbeitungseinheit um eine Sortiermaschine handelt.

Für eine Sortierung von Postsendungen - insbesondere von Briefen und Paketen - sind eine Vielzahl von Sortiermaschinen bekannt. Besonders vorteilhaft ist ein Einsatz der Erfindung mit einer Erfassung von graphischen Informationen in einer Sortiermaschine, die so ausgestaltet ist, dass ihr Postsendungen über eine oder mehrere Stoffeingaben zugeführt und an entsprechenden Stellen nach Durchführung von Sortiervorgängen in Behälter abgeworfen werden.

Eine Sortierung erfolgt beispielsweise so, dass einem berücksichtigten Zustellpunkt eine Abwurfstelle/Endstelle der Sortiervorrichtung zugeordnet werden kann.

Es ist gegebenenfalls möglich, eine Entgeltüberprüfung vorzunehmen und das Ergebnis der Entgeltüberprüfung als ein weiteres Sortierkriterium einzusetzen. Hierdurch ist es möglich, Postsendungen, welche nicht ein für ihre Beförderung erforderliches Entgelt aufweisen, aus einem normalen Beförderungsgang auszuschleusen.

Auf diese Weise ist es möglich, die Sortiervorrichtung auch als Entgeltüberprüfungseinheit einzusetzen.

Erfindungsgemäß kann es sich bei der Bearbeitungseinheit für Postsendungen jedoch selbstverständlich gleichermaßen auch um eine separate Entgeltüberprüfungseinheit handeln, die beispielsweise vor oder nach einer Sortiermaschine oder an einer anderen Stelle eines Beförderungsgangs der Postsendungen angeordnet ist. Erfindungsgemäß umfasst ist sowohl die Erfassung des Datensatzes mit den Daten zur Identifizierung der Postsendung bei einer Einlieferung der Postsendung, bei ihrer Beförderung sowie gegebenenfalls bei ihrer Auslieferung, beispielsweise durch Übergabe an einen Empfänger durch Einwurf in eine Einwurfvorrichtung oder durch eine definierte Hinterlegung, beispielsweise in einer gegebenenfalls elektronischen Postfachanlage beziehungsweise in einer elektronischen Paketfachanlage.

Der Datensatz oder ein Teil davon kann dem Nutzer über eine webbasierte Serverplattform zur Verfügung gestellt werden.

Ferner ist es zweckmäßig, dass der Datensatz oder ein Teil davon gegebenenfalls in ein anderes Format umgewandelt und dem Nutzer über eine elektronische Benachrichtigung zur Verfügung gestellt wird.

Gegebenenfalls wird das Verfahren so durchgeführt, beziehungsweise das System so ausgestaltet, dass der Datensatz oder wenigstens ein Teil davon codiert wird und für den Nutzer decodierbar ist.

Ferner ist es zweckmäßig, dass der Datensatz oder wenigstens ein Teil davon dem Nutzer in einem Report und/ oder einer Auswertung zur Verfügung gestellt wird.

Eine Weiterentwicklung der Erfindung sieht vor, dass der Datensatz Daten zum Status der Postsendung, beginnend mit der Entgegennahme der Postsendung an der Empfangsstation, umfasst, die von einer weiteren Bearbeitungseinheit aus verändert, insbesondere aktualisiert werden.

Eine Weiterentwicklung der Erfindung sieht vor, dass die graphischen Informationen einen Adressaten der Postsendung umfassen.

Ferner ist es zweckmäßig, dass die graphischen Informationen mittels einer Einrichtung zum Scannern erfasst werden.

Es ist möglich, dass zusätzliche Informationen auf eine andere Art erfasst werden, beispielsweise manuell, zum Beispiel per Tastatur an einer Bearbeitungseinheit.

Die zusätzlichen Informationen können gleichfalls in dem erfindungsgemäßen Datensatz gespeichert werden.

Eine Weiterentwicklung der Erfindung sieht vor, dass die auf der Oberfläche der Postsendung befindlichen und an der Bearbeitungseinheit erfassten graphischen Informationen von einer Bildverarbeitungseinrichtung dahingehend untersucht werden, ob die erfassten graphischen Informationen von vorgegebenen graphischen Informationen abweichen und dass für den Fall einer Abweichung eine Benachrichtigung am Nutzerterminal oder der Bearbeitungseinheit generiert wird.
Die Daten zur Identifizierung der Postsendung werden nachfolgend aus Vereinfachungsgründen als Identifizierungsinformation bezeichnet.

Eine Weiterbildung der Erfindung sieht vor, die Identifizierungsinformation sowohl auf die Postsendung aufzubringen als auch an eine Datenverarbeitungseinheit zu übermitteln.

Die Identifizierungsinformation kann als Mittel zur Abrechnung und/oder zur Bearbeitung der Postsendung eingesetzt werden.

Es ist besonders vorteilhaft, einem Nutzer des Logistiksystem eine einfache und unkomplizierte Erzeugung der Identifizierungsinformation zu ermöglichen. Insbesondere ist es möglich, Identifizierungsinformationen einzusetzen, die zumindest teilweise aus von einem Nutzer eingebbaren und ggf. frei wählbaren Angaben bestehen.

Weiterbildungen der Erfindung sehen vor, nachfolgende Bearbeitungsschritte unter Berücksichtigung der Identifizierungsinformation durchzuführen. Besonders vorteilhaft ist eine Bearbeitung der Identifizierungsinformation im Bereich eines Netzwerkknotens und/oder im Bereich der Bearbeitungseinheit.

Die Erfindung betrifft ferner einen Netzwerkknoten, der sich dadurch auszeichnet, dass er mindestens ein Mittel zum Empfangen eines Datensatzes mit Daten zur Identifizierung einer Postsendung aufweist, und dass er mit einem Mittel zum Speichern des Datensatzes zusammenwirkt und dass er mit einer Serverplattform zusammenwirken kann, die den Datensatz oder wenigstens einen Teil davon einem Nutzer (6,10) zur Verfügung stellen kann.

Die Erfindung beinhaltet Ausführungsformen des Netzwerkknotens und/oder der Bearbeitungseinheit, die es ermöglichen, eine sichere Entgeltabrechnung und/oder Entgeltüberprüfung (Entgeltsicherung) mit einer einfachen Handhabung der Postsendungen durch den Nutzer zu verbinden.

Der Netzwerkknoten kann Funktionen zur Nutzerrechtverwaltung, zur Verwaltung von Gebührenbeträgen und/oder zur Abrechnung von Frankierleistungen und/oder unmittelbar der Versandleistungen vornehmen.

Da der Netzwerkknoten somit Funktionen bereitstellt, die ansonsten aufwändiger durch den jeweiligen Nutzer als Absender der Postsendung eingegeben werden, wird der Netzwerkknoten nachfolgend auch als Auftragsmanagementeinheit (AM) bezeichnet.

Eine Weiterentwicklung des Verfahrens, der Vorrichtung und des Systems sieht vor, dass die Postsendung in ein Logistiksystem eingeliefert wird und dass wenigstens ein in dem Logistiksystem erfolgender Bearbeitungsschritt in Abhängigkeit von der Identifizierungsinformation erfolgt.

Es ist besonders vorteilhaft, das dieser Bearbeitungsschritt in der Bearbeitungseinheit erfolgt.

Die Positivliste enthält ein Verzeichnis aller Postsendungen, für die eine reguläre Bearbeitung innerhalb des Logistiksystems erfolgt, insbesondere eine Beförderung von einem Einlieferungsort zu einem Zustellort.

Die Erfindung beinhaltet ferner ein neuartiges Logistiksystem, das einen Transport von Postsendungen an vorgesehene Empfänger automatisiert und erheblich vereinfacht.

Die Erfindung betrifft ferner ein System zum Bearbeiten einer Postsendung mit folgenden Komponenten
- einer Empfangsstation zur Entgegennahme der Postsendung,
- einer Bearbeitungseinheit zur Erfassung von auf der Postsendung befindlichen graphischen Informationen,
- einer Serverplattform zum Hinterlegen des Datensatzes mit den Daten.

Dieses System eignet sich insbesondere für eine Durchführung des dargestellten Verfahrens.

Erfindungsgemäß wird ein Logistiksystem bereitgestellt, das sich durch eine besonders hohe Sicherheit und Zuverlässigkeit auszeichnet und das eine besonders einfache und sichere Abrechnung der Postsendung ermöglicht.

Der Begriff Logistiksystem ist im Rahmen der Erfindung in seiner weitesten Bedeutung zu verstehen. Er umfasst insbesondere Systeme, welche Mittel und Einrichtungen enthalten, um den Transport von Postsendungen von Einlieferungsorten zu Zustellorten auf einem Transportweg, vorzugsweise innerhalb eines Postverteilnetzes, durchzuführen.

Eine Fortbildung des Verfahrens, der Vorrichtung und des Logistiksystems zeichnet sich dadurch aus, dass eine Speicherung und/oder Übermittelung der Identifizierungsinformation durch eine Datenverarbeitungseinheit erfolgt, die mit einem Mittel zum Versehen der Postsendung mit der Identifizierungsinformation gekoppelt ist.

Dies erfolgt beispielsweise dadurch, dass die Datenverarbeitungseinheit mit einem Drucker verbunden ist, der die Postsendung mit der Identifizierungsinformation bedruckt. Es ist jedoch gleichfalls möglich, den Drucker mit einer Schreibeinheit zum Beschreiben eines elektronischen Datenträgers, beispielsweise eines Transponders, zu versehen. Ein derartiges Beschreiben kann beispielsweise kontaktlos durch elektromagnetische Signale erfolgen.

Eine Weiterbildung der Erfindung sieht vor, dass die Identifizierungsinformation auf die Postsendung gedruckt wird.

Eine bevorzugte Ausführungsform der Erfindung zeichnet sich dadurch aus, dass die Identifizierungsinformation auf einen Informationsträger aufgebracht wird, der mit der Postsendung verbindbar ist.

Der Informationsträger kann beispielsweise als ein Aufkleber gestaltet sein. Ferner ist es möglich, dass er ein Sendungsbestandteil ist, beispielsweise indem die Identifizierungsinformation auf ein in die Postsendung eingebrachtes Schreiben aufgedruckt wird.

Eine Weiterbildung der Erfindung zeichnet sich dadurch aus, dass die Identifizierungsinformation in einem mit der Postsendung verbundenen oder verbindbaren Transponder gespeichert wird.

Für einen erfindungsgemäßen Einsatz eignen sich vielfältige Arten von Transpondern, die als Sende- und/oder Empfangsgeräte dienen. Insbesondere handelt es sich hierbei um Empfangsgeräte, die nach Empfang eines fremden Signals geeignet sind, ein eigenes Signal abzugeben.

Besonders bevorzugt ist ein Einsatz von Transpondern, die mit wenigstens einer Ideritifikationsangabe versehen sind. Derartige Transponder werden nachfolgend auch als RFID-Tags bezeichnet.

Es ist zweckmäßig, eine visuell erfassbare Kennzeichnung von Postsendungen durch RFID-Technologien mit elektronisch mehrfach beschreibbaren und auslesbaren Transpondem zu ersetzen oder zu ergänzen. Derartige Systeme haben den Vorteil, dass in einem Transponder eine Vielzahl von Informationen elektronisch ein- und ausgelesen werden kann, wodurch automatische Transport-, Sortier-, Nachverfolgungs- oder Verteilvorgänge gesteuert werden können, ohne dass die visuelle Anzeige von Informationen erforderlich ist.

Ein Transponder mit Identifikationsangaben (RFID-Tags) wird vorzugsweise als ein RFID-Tag ausgeführt. Ein RFID-Tag besteht aus einem Mikrochip und einer Antenne. Auf dem Chip ist ein Code gespeichert, der verarbeitungsrelevante Informationen enthält. Insbesondere handelt es sich bei den Informationen um Identifikations- (ID)-Angaben.

Transponder sind so ausgestattet, dass sie auf ein auslösendes (Radio-) Signal eines Lesegerätes selbst Signale senden und/oder empfangen. Aktive Transponder enthalten eine Energieversorgung für ihren Betrieb. Passive Transponder erhalten hingegen Energie durch die von dem Lesegerät ausgesendeten Signale.

Durch Erfassen der auf die Postsendung aufgebrachten Identifizierungsinformation ist eine Abrechnung der Postsendung möglich.

Für den Fall, dass eine Erfassung der auf der Postsendung aufgebrachten bzw, mit der Postsendung verbundenen Identifizierungsinformation im Bereich einer Bearbeitungseinheit erfolgt, ist es zweckmäßig, die Identifizierungsinformation mit abrechnungsrelevanten Daten zu verbinden.

Abrechnungsrelevante Daten sind insbesondere Informationen über einen Absender, einen Empfänger, Abmessungen und Gewicht der Postsendung sowie von dem jeweiligen Nutzer gewünschte Leistungen, beispielsweise eine Eilzustellung.

Eine Weiterbildung der Erfindung sieht vor, diese Informationen auf Grundlage der Identifizierungsinformation zu gewinnen.

Eine weitere Fortentwicklung der Erfindung beinhaltet eine Ermittlung der sendungsrelevanten Daten durch Überprüfung der Postsendung, beispielsweise durch optische Zeichenerkennung (optical character recognitation).

Eine Weiterbildung der Erfindung sieht vor, eine Abrechnung unter Berücksichtigung von ermittelten Werten des Gewichts und/oder der Abmessung der Postsendung durchzuführen.

Diese Ermittlung kann beispielsweise im Bereich der Bearbeitungsstation erfolgen.

Es ist jedoch gleichermaßen möglich, eine Abrechnung auf Grundlage der übermittelten Identifizierungsinformationen durchzuführen.

Bei einer Abrechnung unter Berücksichtigung der übermittelten Identifizierungsinformationen ist es beispielsweise möglich, von dem jeweiligen Nutzer eingegebene Angaben zu der Sendung, insbesondere zu ihrer Sendungskategorie (Produktkategorie), beispielsweise Standardbrief oder Paket, Gewicht, Abmessungen, Zusatzleistungen wie Nachweispflicht, Eilzustellung, Terminzustellung, Versicherungen, Nachnahme oder CO2-neutraler Transport bzw. durch Eingabe der entsprechenden Werte für die Sendungsgrößen und/oder Sendungsgewichte zu berücksichtigen.

Bei einer Auswertung der elektronisch übermittelten Identifizierungsinformation bestehen verschiedene Abrechnungsmöglichkeiten.

Die jeweilige Abrechnung kann auf Grundlage eines Vertrages zwischen dem Logistikunternehmen und dem Nutzer und/oder auf einer Grundlage von beispielsweise öffentlich bekannt gegebenen Nutzungsbedingungen des Logistikunternehmens auch gegenüber nicht registrierten Nutzern erfolgen.

Insbesondere bei registrierten Nutzern ist es zweckmäßig, dass die registrierten Nutzer mit den jeweiligen Identifizierungsinformationen einer Postsendung auch abrechnungsrelevante Daten, beispielsweise die Sendungskategorie oder die jeweilige Beförderungsart, übermitteln.

Eine Erfassung der Sendungskategorie und/oder der Beförderungsart kann beispielsweise im Bereich einer entsprechend umgerüsteten Frankiermaschine erfolgen, so dass beispielsweise Gewichtserfassungsfunktionen der Frankiermaschine genutzt werden können.

Ferner ist so eine unmittelbare Zuordnung zwischen dem ermittelten Gewicht und der Postsendung möglich, indem eine Verbindung der Prozessschritte des Ermittelns der Sendungsdaten und des Aufbringens der Identifizierungsinformation erfolgt.

Durch eine Kombination der Verfahrensschritte der Ermittlung der Sendungsdaten und des Aufbringens der Identifizierungsinformation ist es besonders einfach möglich, diese Daten zusammen zu erfassen.

Dies erleichtert eine nachfolgende Übertragung der Identifizierungsinformation und der ggf. zugehörigen Sendungsdaten und/oder Abrechnungsdaten an den Netzwerkknoten.

Die Übertragung kann beispielsweise unmittelbar durch die Frankiermaschine und/oder durch einen Nutzercomputer erfolgen, Beispielsweise handelt es sich hierbei um eine Übermittelung über eine geeignete Datenleitung, beispielsweise eine Telefonverbindung oder eine internetbasierte Verbindung.

Eine Weiterentwicklung des Verfahrens, der Vorrichtung, des Netzwerkknotens, des Logistiksystems und der Bearbeitungseinheit zeichnet sich dadurch aus, dass in dem Fall, dass die Identifizierungsinformation in der Positivliste gespeichert ist, eine Weiterverarbeitung der Postsendung erfolgt.

Eine Weiterentwicklung des Verfahrens, der Vorrichtung, des Netzwerkknotens, des Logistiksystems und der Bearbeitungseinheit zeichnet sich dadurch aus, dass die Weiterverarbeitung einen Transport der Postsendung zu einem vorgesehenen Empfangsort umfasst.

Eine Weiterentwicklung des Verfahrens, der Vorrichtung, des Netzwerkknotens, des Logistiksystems und der Bearbeitungseinheit zeichnet sich dadurch aus, dass die Identifizierungsinformation Angaben zur Identifizierung eines Nutzers enthält.

Eine Weiterentwicklung des Verfahrens, der Vorrichtung, des Netzwerkknotens, des Logistiksystems und der Bearbeitungseinheit zeichnet sich dadurch aus, dass der Nutzer in einem Berechtigungssystem registriert wird.

Eine Weiterentwicklung des Verfahrens, der Vorrichtung, des Netzwerkknotens, des Logistiksystems und der Bearbeitungseinheit zeichnet sich dadurch aus, dass dem Nutzer nach Registrierung in dem Berechtigungssystem eine Zugangsberechtigung zur Übermittelung der Identifizierungsinformation an die Datenverarbeitungseinheit eingeräumt wird.

Eine Weiterentwicklung des Verfahrens, der Vorrichtung, des Netzwerkknotens, des Logistiksystems und der Bearbeitungseinheit zeichnet sich dadurch aus, dass die Identifizierungsinformation zusätzlich zu den Angaben zur Identifizierung des Nutzers weitere Angaben enthält.

Eine Weiterentwicklung des Verfahrens, der Vorrichtung, des Netzwerkknotens, des Logistiksystems und der Bearbeitungseinheit zeichnet sich dadurch aus, dass ein Eingabemittel vorgesehen ist, das es ermöglicht, dass die weiteren Angaben zumindest teilweise durch den Nutzer eingegeben werden.

Eine Weiterentwicklung des Verfahrens, der Vorrichtung, des Netzwerkknotens, des Logistiksystems und der Bearbeitungseinheit zeichnet sich dadurch aus, dass die weiteren Angaben eine Nummer beinhalten. Es kann sich hierbei um eine fortlaufende Nummer handeln, was die Abrechnung erleichtert. Ein Einsatz von fortlaufenden Nummern ist zwar vorteilhaft, jedoch nicht notwendig.

Eine Weiterentwicklung des Verfahrens, der Vorrichtung, des Netzwerkknotens, des Logistiksystems und der Bearbeitungseinheit zeichnet sich dadurch aus, dass bei einem Bearbeitungsvorgang der Postsendung die Identifizierungsinformation aus der Positivliste gelöscht wird.

Eine Weiterentwicklung des Verfahrens, der Vorrichtung, des Netzwerkknotens, des Logistiksystems und der Bearbeitungseinheit zeichnet sich dadurch aus, dass die Postsendung aus einem normalen Beförderungsgang von Postsendungen ausgeschleust wird, wenn die Identdizierungsinformation nicht in der Positivliste gespeichert ist.

Eine Weiterentwicklung des Verfahrens, der Vorrichtung, des Netzwerkknotens, des Logistiksystems und der Bearbeitungseinheit zeichnet sich dadurch aus, dass die an den Netzwerkknoten übermittelte Identifizierungsinformation zu einer Abrechnung der Postsendung eingesetzt wird.

Eine Weiterentwicklung des Verfahrens, der Vorrichtung, des Netzwerkknotens, des Logistiksystems und der Bearbeitungseinheit zeichnet sich dadurch aus, dass die auf die Postsendung aufgebrachte Identifizierungsinformation zur Abrechnung der Postsendung eingesetzt wird.

Eine Weiterentwicklung des Verfahrens, der Vorrichtung, des Netzwerkknotens, des Logistiksystems und der Bearbeitungseinheit zeichnet sich dadurch aus, dass ein Abgleich der übermittelten Identifizierungsinformation und der auf der Postsendung aufgebrachten Identifizierungsinformation erfolgt.

Eine Weiterentwicklung des Verfahrens, der Vorrichtung, des Netzwerkknotens, des Logistiksystems und der Bearbeitungseinheit zeichnet sich dadurch aus, dass an den Netzwerkknoten Informationen zur Abrechnung der Postsendung übermittelt werden.

Eine Weiterentwicklung des Verfahrens, der Vorrichtung, des Netzwerkknotens, des Logistiksystems und der Bearbeitungseinheit zeichnet sich dadurch aus, dass Informationen zur Abrechnung unter Berücksichtigung von mit der Postsendung verbundenen Informationen ermittelt werden.

Eine Weiterentwicklung des Verfahrens, der Vorrichtung, des Netzwerkknotens, des Logistiksystems und der Bearbeitungseinheit zeichnet sich dadurch aus, dass abrechnungsrelevante Daten durch eine Überprüfung von physischen Eigenschaften der Sendung ermittelt werden.

Eine Weiterbildung der Erfindung beinhaltet eine Abrechnung anhand der übermittelten Identifizierungsinformation und/oder eine Abrechnung anhand der zusammen mit der Identifizierungsinformation erfassten Sendungsdaten.

Eine Weiterentwicklung des Verfahrens, der Vorrichtung, des Netzwerkknotens, des Logistiksystems und der Bearbeitungseinheit zeichnet sich dadurch aus, dass die Frankiereinheit ein Mittel zur Erzeugung von Identifizierungsinformationen aufweist, dass die Vorrichtung ferner ein Mittel zum Versehen von Postsendungen mit der Identifizierungsinformation enthält und dass die Vorrichtung ferner ein Mittel zur Übertragung der Identifizierungsinformation an einen Netzwerkknoten enthält.

Eine Weiterentwicklung des Verfahrens, der Vorrichtung, des Netzwerkknotens, des Logistiksystems und der Bearbeitungseinheit zeichnet sich dadurch aus, dass die Bearbeitungseinheit ein Mittel zum Erfassen von mit den Postsendungen verbundenen Identifizierungsinformationen enthält und dass die Bearbeitungsstation ferner ein Mittel zur Überprüfung enthält, ob die Identifizierungsinformationen in einer Positivliste gespeichert sind.

Eine Weiterentwicklung des Verfahrens, der Vorrichtung, des Netzwerkknotens, des Logistiksystems und der Bearbeitungseinheit zeichnet sich dadurch aus, dass sie geeignet ist, ein Mittel zu einer Ausschleusung von Postsendungen aus einem Beförderungs- und/oder Bearbeitungsvorgang von Postsendungen beinhaltet.

Eine Weiterentwicklung des Verfahrens, der Vorrichtung, des Netzwerkknotens, des Logistiksystems und der Bearbeitungseinheit zeichnet sich dadurch aus, dass das Logistiksystem ein Mittel zum Empfangen von elektronisch übermittelten Identifizierungsinformationen und zur Speicherung der Identifizierungsinformationen in einer Positivliste enthält, dass das Logistiksystem ferner ein Mittel zum Überprüfen von auf Postsendungen aufgebrachten Identifizierungsinformationen enthält und dass das Logistiksystem ein Mittel zur Durchführung einer Überprüfung, ob die auf den Postsendungen aufgebrachten Identifizierungsinformationen in der Positivliste gespeichert sind, enthält.

Die Identifizierungsinformation und ggf. die abrechnungsrelevanten Informationen können auf verschiedene Weise auf die Postsendung aufgebracht werden. Insbesondere ist es möglich, übliche Verfahren zum Bedrucken von Postsendungen einzusetzen.

Eine besonders bevorzugte Ausführungsform des Verfahrens zum Bedrucken erfolgt unter einem Einsatz von Drucksystemen, die einen Matrixcode auf Sendungen aufbringen und die Transaktionsdaten bis zur Übergabe an das zentrale System gesichert halten. Eine Portoladung im Vorfeld ist nicht erforderlich. Die Abrechnung erfolgt täglich im Nachhinein über eine Schnittstelle zwischen Maschine und Auftragsmanagement. Hierbei werden die Informationen aus dem Matrixcode (Nutzernummer, Auftragsnummer, Sendungsnummer) an das Auftragsmanagement übergeben und dort zur weiteren Prüfung und Abrechnung genutzt.

Eine Weiterbildung der Erfindung sieht vor, einem Nutzer, beispielsweise über eine Webseite, Informationen zugänglich zu machen.

Beispielsweisweise wird der Datensatz zu der Postsendung bei Einlieferung und/oder Frankierung der Sendung erstellt und mit einer Sendungsnummer versehen. Der Datensatz kann ein Feld "Status" umfassen, das bei Einlieferung der Postsendung auf "eingeliefert" gesetzt wird,

Die Sendungsnummer kann als Code vorliegen, und die Empfängeradresse als Teil der graphischen Informationen kann beispielsweise mittels OCR (Optical Character Recognition) erfasst werden. Anhand der Sendungsnummer wird der Datensatz zur Postsendung ermittelt, und die erfasste Empfängeradresse wird dem Datensatz zugefügt. Ein Webserver liest sodann aus dem Datensatz auch die darin enthaltenen Informationen zur Empfängeradresse aus und zeigt sie auf einer entsprechenden Webseite an. In jedem Fall ist wichtig, dass Daten und/oder Informationen zu einer Postsendung erfasst werden, anhand derer wenigstens eine die Postsendung und/oder den Einlieferer der Postsendung identifizierende Angabe ermittelt wird. Die Sendungsnummer ist hierfür besonders geeignet, doch es sind auch andere Daten zur Identifizierung denkbar.

Zweckmäßig ist es, den Datensatz in einem so genannten Kundendatenmanagement-System (KDM) zu hinterlegen. Der Datensatz kann dann zum Beispiel auch für eine spätere Leistungsabrechnung eines Postunternehmens genutzt werden.

In einer bevorzugten Ausführungsform des Verfahrens ist vorgesehen, dass der Datensatz oder Teile davon dem Nutzer über eine webbasierte Serverplattform zur Verfügung gestellt werden.

Ebenso ist es zweckmäßig, dass der Datensatz oder Teile davon ggf. in ein anderes Format umgewandelt und einem Nutzer über eine elektronische Benachrichtigung zur Verfügung gestellt werden.

Eine elektronische Benachrichtigung kann insbesondere über einen so genannten Push-Prozess übermittelt werden. Beispiele hierfür sind E-Mail, SMS (Short Message Service), MMS (Multimedia Messaging Service), Skype (Internet-Telefonie) und Instant-Messaging (so genannter "Chat").

Eine Umwandlung des Formats des Datensatzes oder Teilen davon kann aus verschiedenen Gründen erfolgen. Insbesondere für die Übermittlung einer E-Mail, SMS und dergleichen ist es jedoch erforderlich, dass beispielsweise digitale Bilddaten in ein einfaches Textformat umgewandelt werden.

In einer weiteren zweckmäßigen Ausbildung des Verfahrens werden der Datensatz oder Teile davon codiert und sind für den Nutzer decodierbar.

So wird sichergestellt, dass nur ein berechtigter Nutzer Zugang zu den Daten einer Postsendung erlangt.

Praktisch erfolgt eine Codierung zum Beispiel in der Weise, dass eine Sendungsnummer als Code auf die Postsendung aufgebracht wird. Besonders bewährt hat sich hierfür der so genannte "Post-Matrix-Code".

Bei diesem Code handelt es sich um einen zweidimensionalen Code, der im Vergleich zu eindimensionalen Barcodes eine deutlich höhere Informationsdichte pro Fläche aufweist. Der Post-Matrix-Code ist darüber hinaus auch geeignet für die Frankierung einer Postsendung und unterliegt einer Norm.

Eine weitere zweckmäßige Ausführungsform des Verfahrens sieht vor, dass der Datensatz oder Teile davon einem Nutzer in einem Report und/oder einer Auswertung zur Verfügung gestellt werden.

Insbesondere Geschäftskunden haben ein Interesse daran, die Daten der in den Verkehr gebrachten Postsendungen besonders aufbereitet angezeigt zu erhalten Die Aufbereitung kann beispielsweise in einer Aufgliederung nach verschiedenen Empfängeradressen, nach dem Versandstatus, dem Einlieferungsdatum und dergleichen erfolgen. Besonders zweckmäßig ist es, wenn der Datensatz Daten zum Status der Postsendung umfasst, beginnend mit der Entgegennahme der Postsendung an der Empfangsstation. Diese Daten zum Status können von einer weiteren Bearbeitungseinheit aus verändert, insbesondere aktualisiert, werden. Sobald eine Postsendung vorgegebene Stationen auf ihrem Beförderungsweg erreicht, wird beispielsweise ein entsprechender, auf der Postsendung befindlicher Code gescannt und der Status im Datensatz entsprechend aktualisiert. Ein Webserver hat Zugriff auf den Datensatz und gibt den aktualisierten Inhalt für einen Kunden auf einer Webseite an.

Die graphischen Informationen umfassen zweckmäßigerweise Informationen zu einem Adressaten der Postsendung.

Die graphischen Informationen werden vorzugsweise mittels einer Einrichtung zum Scannen erfasst.

Ein Scanner dient beispielsweise zum Einlesen der Adresse, und je nach Scanner-Typ werden die eingelesenen Informationen per Funk oder per Kabel übertragen. Üblich sind hierbei Funkscanner mit mehrzeiligem Display und einer Ausgabemöglichkeit sowie einem Touchscreen und/oder einer Tastatur mit rudimentärer Eingabefunktion.

Bei verschiedenen Scannern wird häufig eine so genannte Scanner-Controller-Komponente verwendet, die eine Schnittstelle zwischen den Scannern und den restlichen Komponenten eines Systems darstellt und die an verschiedenen Orten zu verschiedenen Zeiten eingehende Matrix-Codes von verschiedenen Scannern zur Weiterverarbeitung verwaltet.

Allgemein ist eine Zuordnung der verschiedenen graphischen Informationen auf der Oberfläche der Postsendung zu spezialisierten Lesegeräten von Vorteil. Dabei kann die Erfassung der graphischen Informationen durch eine zentrale Bildverarbeitungseinrichtung erfolgen, die über genormte Schnittstellen die speziellen Lesegeräte mit digitalisierten Informationen versorgt.

Beispiele für spezialisierte Lesegeräte sind Geräte, die in den graphischen Informationen enthaltene Codierungen durch Entzifferung des Codes ermitteln. Zum Beispiel dienen derartige spezialisierte Lesegeräte zum Erfassen von Informationen aus digitalen Freimachungsvermerken im bereits oben genannten Post-Matrix-Code.

Eine zusätzliche vorteilhafte Ausführungsform des Verfahrens zeichnet sich dadurch aus, dass die auf der Oberfläche der Postsendung befindlichen und an der Bearbeitungseinheit erfassten graphischen Informationen von einer Bildverarbeitungseinrichtung dahingehend untersucht werden, ob die erfassten graphischen Informationen von vorgegebenen graphischen Informationen abweichen und dass für den Fall einer Abweichung eine Benachrichtigung am Nutzerterminal und an der Bearbeitungseinheit generiert wird.

Der Vergleich zwischen den erfassten graphischen Informationen und den vorgegebenen graphischen Informationen kann alternativ und/oder zusätzlich auch für eine Änderung einer Bearbeitung der Postsendung eingesetzt werden.

Insbesondere ist es zweckmäßig, eine Postsendung, bei der eine Abweichung zwischen den erfassten graphischen Informationen und vorgegebenen graphischen Informationen festgestellt wird, aus einem für eine Bearbeitung von sonstigen Postsendungen vorgesehenen Bearbeitungsgang auszuschleusen.

Beispielsweise wird durch den Vergleich überprüft, ob eine missbräuchliche Erzeugung eines auf der Postsendung befindlichen Frankiervermerks erfolgte.

In dem vorgenannten Fall dient das Ausschleusen der Postsendung aus dem Beförderungslauf einer Entgeltsicherung, insbesondere einer Sicherstellung, dass nur solche Postsendungen befördert werden, für die ein ordnungsgemäßes Entgelt entrichtet wurde oder wird.

Eine Bearbeitung der erfassten graphischen Informationen kann auf vielfältige Weise erfolgen,

In einer bevorzugten Weiterbildung der Erfindung kann ein Bearbeitungszentrum für Postsendungen mehrere zentrale Bildverarbeitungseinrichtungen enthalten oder aber eine zentrale Bildverarbeitungseinrichtung kann die graphischen Informationen mehrerer Brief- oder Frachtzentren verarbeiten.

Darüber hinaus kann die Verarbeitung der auf den Postsendungen vorhandenen graphischen Informationen mit Hilfe einer Bildverarbeitungseinrichtung sowohl sequenziell als auch simultan erfolgen. Insbesondere ist es vorteilhaft, das Verfahren mit Hilfe der Bildverarbeitungseinrichtung so durchzuführen, dass vorhandene Bildverarbeitungskapazitäten durch eine wirksame Verteilung der Bildverarbeitungsaufgaben auf verschiedene Komponenten einer zentralen Bildverarbeitungseinrichtung möglichst effektiv genutzt werden.

Der Begriff der Bildverarbeitung, insbesondere der Bildverarbeitungseinrichtung, ist in keiner Weise einschränkend zu verstehen. Insbesondere umfasst der Begriff die Transformation der graphischen Informationen in weitere graphische Informationen, beispielsweise die Umwandlung in ein anderes Format, die Weiterleitung der graphischen Informationen und/oder die Auswertung von in den graphischen Informationen enthaltenen und/oder aus den graphischen Informationen gewonnenen weiteren Informationen, wie dem Lesen einer Empfängeradresse oder dem Entziffern einer in den graphischen Informationen enthaltenen codierten Information. Ein derartiges Entziffern erfolgt beispielsweise durch optische Bilderkennung - optical character recognitation (OPR). Außerdem beinhaltet der Begriff der Bildverarbeitung auch die Merkmale, die auf dem Gebiet der Bildverarbeitung gelegentlich als Bildinterpretation bezeichnet werden. Hierunter ist beispielsweise das Entziffern von Empfängeradressen durch das Lesen der die Empfängeradresse wiedergebenden graphischen Informationen, beispielsweise in Art einer handschriftlichen Angabe, mit umfasst.

Die Aufgabe der Erfindung wird darüber hinaus durch ein System zum Bearbeiten einer Postsendung mit einem der oben genannten Verfahren gelöst, das die folgenden Komponenten umfasst:
- eine Empfangsstation zur Entgegennahme der Postsendung,
- eine Bearbeitungseinheit zur Erfassung von auf der Postsendung befindlichen graphischen Informationen,
- eine Serverplattform zum Hinterlegen des Datensatzes mit den Daten zur Identifizierung der Postsendung und mit den auf der Postsendung befindlichen erfassten graphischen Informationen, die mit einen Nutzerterminal und der Bearbeitungseinheit verbunden ist und einem Nutzer Daten und/oder Informationen des Datensatzes zur Verfügung stellt.

Bei der Empfangsstation kann es sich beispielsweise um einen Briefkasten, ein Schalterterminal, eine elektronische Brieffachanlage, eine elektronische Paketfachanlage oder eine Drop-Box handeln.

Weitere Vorteile, Besonderheiten und zweckmäßige Weiterbildungen der Erfindung ergeben sich aus den Unteransprüchen und der nachfolgenden Darstellung der Erfindung anhand bevorzugter Ausführungsbeispiele.

### Kurze Beschreibung der Zeichnung:

Die Zeichnung zeigt:

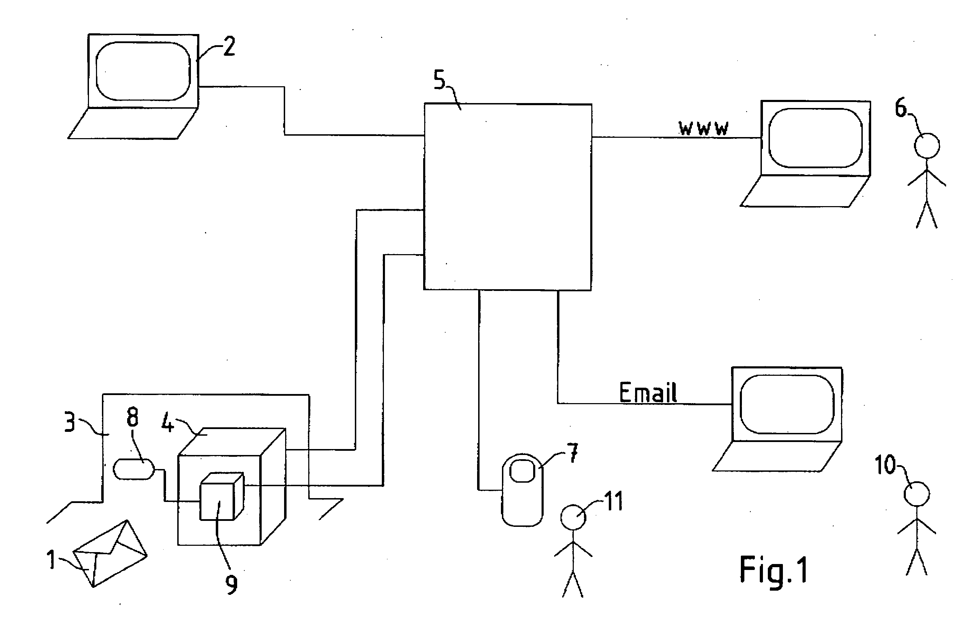

- Fig. 1: eine Prinzipdarstellung der Erfindung

### Detaillierte Beschreibung der Erfindung anhand der Zeichnung:

Fig. 1 zeigt eine Prinzipdarstellung eines erfindungsgemäßen Logistiksystems. Das Logistiksystem ermöglicht einer Vielzahl von Nutzern, Sendungen mit Identifizierungsinformationen zu versehen und diese Sendungen zur physischen Beförderung innerhalb des Logistiksystems einzuliefern.

Eine besonders bevorzugte Ausführungsform der Erfindung beinhaltet eine Registrierung des Nutzers.

Die Registrierung des Nutzers erfolgt beispielsweise durch eine Eintragung von Identifikationsinformationen und ggf. Sicherheitsmerkmalen des Nutzers in einer Datenbank.

Der Netzwerkknoten beinhaltet in einer Ausführungsform eine Autorisier- und Authentifiziereinheit zum Überprüfen der Berechtigung des Nutzers zum Zugriff auf den Frankierdienst und umfasst, dass die Überprüfung der Berechtigung des Nutzers zum Zugriff auf einen Frankierdienst anhand eines dem Nutzer zugeordneten Nutzerberechtigungsprofils durchführbar ist, dass der Netzwerkknoten über eine Schnittstelle mit einem Frankierdienst verbunden ist und dem Frankierdienst Daten übermittelt.

Zur Sammlung von Postgütern sind Sammelbehälter bekannt, die beim Einwerfen von Postsendungen eine Aufbewahrung der Postsendungen ermöglichen und außerdem einen Zugriff auf bereits eingeworfene Sendungen verhindern sollen. Bei Briefkästen ist der Einwurfschlitz üblicherweise so schmal ausgebildet, dass ein Zugriff auf eingeworfene Briefe nicht möglich ist.

Auch im Bereich der Sammlung von größeren Postgütern wie Paketen und Päckchen ist es bekannt, Behälter zur Sammlung dieser Güter einzusetzen.

Eine Einlieferung größerer Sendungsmengen erfolgt zweckmäßigerweise an anderen geeigneten Einlieferungsstellen, beispielsweise Filialen des Logistiksystems oder unmittelbar im Bereich von Bearbeitungseinheiten des Logistiksystems.

Vorzugsweise wird eine Identifizierungsinformation der Postsendung eingelesen.

Das Einlesen der Identifizierungsinformation erfolgt beispielsweise in einem Briefzentrum. Zum Einlesen der Identifizierungsinformation wird eine Bearbeitungseinheit eingesetzt. Es ist sowohl möglich, hierfür eine eigene Bearbeitungseinheit bereitzustellen, beispielsweise durch eine Vorrichtung, welche geeignet ist, Oberflächen von Postsendungen zu überprüfen und/oder in Transpondem enthaltene Informationen zu lesen.

Es ist jedoch gleichfalls möglich, dass das Einlesen der Identifizierungsinformation der Postsendung in einer für andere Bearbeitungsvorgänge der Postsendung vorgesehenen Bearbeitungseinheit erfolgt, beispielsweise in einer Aufstellmaschine oder in einer Sortiermaschine.

Die Erfindung beinhaltet eine Vielzahl von Möglichkeiten, eine Abrechnung von Postsendungen in einer für einen Nutzer eines Logistiksystems besonders einfachen und gleichzeitig besonders zuverlässigen Weise durchzuführen. Insbesondere ist es nicht erforderlich, vor einer Durchführung von Frankierungen Frankiervermerke zu kaufen oder Wertbeträge aus einem Wertübertragungszentrum zu laden.

Der Nutzer bringt Nutzernummer und laufende Sendungsnummer (und Produkt) auf die Postsendung auf, diese Daten werden eingelesen - beispielsweise in einem Briefzentrum (BZ) des Logistiksystems - und zur Abrechnung herangezogen, beispielsweise erhält der Nutzer eine Rechnung.

Eine Weiterbildung der Erfindung sieht vor, dass der Nutzer vor einer Einlieferung der Postsendung die Postsendung unter Angabe der Identifizierungsinformation an den Netzwerkknoten (AM-System) übermittelt.

Die Erfindung beinhaltet ein Logistiksystem zum Befördern einer Postsendung auf einem Transportweg innerhalb eines Postverteilnetzes, wobei der Transportweg mehrere Knoten des Postverteilnetzes enthält, insbesondere einen Knoten, der einem Zustellpunkt entspricht, sowie wenigstens einen Knoten, der einem Sortierpunkt entspricht.

Der Begriff Logistiksystem umfasst insbesondere Systeme, welche die erforderlichen Mittel und Einrichtungen enthalten, um den Transport von Postsendungen von einem Abgangsort zu einem Zustellpunkt auf einem Transportweg innerhalb eines Postverteilnetzes durchzuführen.

Bei dem Abgangsort handelt es sich beispielsweise um einen Lagerort oder Einlieferungsort der zu transportierenden Postsendung.

Der Zustellpunkt wird vorzugsweise von dem Nutzer ausgewählt.

Der Begriff "Nutzer" ist in seiner weitesten Bedeutung zu verstehen. Insbesondere umfasst er alle Entitäten, welche eine Versendung von Postsendungen vereinbaren und/oder veranlassen können. Beispielsweise kann es sich hierbei auch um Softwareagenten handeln. Eine Einbeziehung natürlicher oder juristischer Personen ist jedoch gleichfalls möglich.

In einer weiteren vorteilhaften Ausgestaltung der Erfindung umfasst der Netzwerkknoten eine Prüfeinheit zum Überprüfen des in dem Anbieterserver ermittelten Bearbeitungsergebnisses.

Vorzugsweise ist die Prüfeinheit dabei in der Lage, eine Vollständigkeit des Bearbeitungsergebnisses zu überprüfen.

Mittels der Prüfeinheit kann somit die Korrektheit und Vollständigkeit des Bearbeitungsergebnisses festgestellt werden. Dies kann beim Vorliegen eines Fehlers in dem Bearbeitungsergebnis beispielsweise dazu genutzt werden, innerhalb des Netzwerkknotens Benachrichtigungen über das Vorliegen eines Fehlers zu erzeugen und an den Nutzercomputer des Nutzers zu übermitteln.

In einer weiteren vorteilhaften Ausgestaltung der Erfindung ist es vorgesehen, dass der Netzwerkknoten eine Berichtseinheit zum Erfassen und Auswerten der Dienstanforderungen und der Bearbeitungsergebnisse aufweist.

Vorteilhafte Weiterbildungen der Erfindung im Hinblick auf das Verfahren entsprechen den im Zusammenhang mit dem Netzwerkknoten beschriebenen Ausführungsformen der Erfindung.

Es ist zweckmäßig, dass die Daten vom Nutzer automatisiert an den Frankierdienst übergeben werden.

In einer bevorzugten Ausgestaltung der Erfindung kann die Weiterleitung an eine zur Bearbeitung von Dienstanforderungen ausgerüstete Datenverarbeitungseinheit, insbesondere einen Computer, erfolgen.

Weitere Eingabemöglichkeiten sind z.B. die schriftliche Erfassung und spätere Digitalisierung, beispielsweise durch eine Dienstleistungseinheit.

Fig. 1 zeigt eine Prinzipdarstellung von Systemkomponenten eines erfindungsgemäßen Systems.

Ein Datensatz mit Daten zur Identifizierung der Postsendung wird an einem Nutzerterminal 2 oder an einer Bearbeitungseinheit 4 angelegt.

Die Postsendung 1 wird an einer Empfangsstation 3 entgegengenommen, und auf der Oberfläche der Postsendung befindliche graphische Informationen, insbesondere die handschriftlich oder maschinell aufgebrachte Empfängeradresse werden an der Bearbeitungseinheit 4 erfasst.

Eine Ausführungsform der Erfindung beinhaltet eine Erfassung der Postsendung durch ein Nutzerterminal und eine nachfolgende weitere Bearbeitung der Postsendung.

Die Daten zur Identifizierung der Postsendung 1 und die graphischen Informationen, d. h. die Empfängeradresse der Postsendung 1 werden von den Nutzerterminals jeweils an eine mit beiden Nutzerterminals verbundene Serverplattform 5 weitergeleitet und dort hinterlegt. Die Daten auf der Serverplattform 5 sind über einen Webbrowser für einen Nutzer 6 und über eine elektronische Benachrichtigung, insbesondere eine Push-Nachricht, für einen weiteren Nutzer 10 zugänglich. Die Erfassung der graphischen Informationen an der Bearbeitungseinheit 4 erfolgt mittels einer Einrichtung zum Scannen 8, insbesondere mittels eines Handscanners. Die von der Einrichtung zum Scannen 8 erfassten graphischen Informationen werden an eine Bildverarbeitungseinrichtung 9 und von dort an die Serverplattform 5 weitergeleitet. Über eine weitere Bearbeitungseinheit 7 kann der Datensatz hinsichtlich der Daten zum Status der Postsendung verändert, insbesondere aktualisiert werden. Die weitere Bearbeitungseinheit 7 wird beispielsweise durch einen Kurier 11 eines Versanddienstleisters bedient.

Es ist jedoch gleichfalls möglich, die Erfindung so durchzuführen, dass der Datensatz mit Daten zur Identifizierung der Postsendung zu einem späteren Zeitpunkt angelegt wird.

Insbesondere umfasst die Erfindung ein Anlegen des Datensatzes bei einer Einlieferung der Postsendung, bei einer Bearbeitung der Postsendung, insbesondere in einer Bearbeitungseinheit, oder gegebenenfalls sogar erst bei einer Auslieferung der Postsendung an einen Empfänger.

Auch in diesem Fall ist es möglich, dass die Daten zur Identifizierung der Postsendung an die Serverplattform 5 weitergeleitet und dort hinterlegt werden. Die Daten auf der Serverplattform 5 sind auch bei dieser Ausführungsform über einen Webbrowser oder ein anderes Zugriffsmittel für einen Nutzer 6 zugänglich. Alternativ ist auch hier eine elektronische Benachrichtigung, insbesondere eine Push-Nachricht, beispielsweise an diesen Nutzer 6 oder gegebenenfalls einen weiteren Nutzer 10 möglich.

Auch in diesem Fall ist es zweckmäßig, dass die Erfassung der graphischen Informationen mittels eines Erfassungsmittels, beispielsweise eines Handscanners oder eines optischen Erfassungsmittels erfolgt.

Auch die nachfolgenden Bearbeitungsschritte können so durchgeführt werden, wie in den vorangegangenen Ausführungsbeispielen dargestellt.

### Bezugszeichenliste:

- 1: Postsendung
- 2: Nutzerterminal
- 3: Empfangsstation
- 4: Bearbeitungseinheit
- 5: Serverplattform
- 6: Nutzer
- 7: Weitere Bearbeitungseinheit
- 8: Einrichtung zum Scannen
- 9: Bildverarbeitungseinrichtung
- 10: Weiterer Nutzer
- 11: Kurier

## Patentansprüche

1. Verfahren zum Bearbeiten einer Postsendung mit folgenden Schritten:
die Postsendung (1) wird in einen Bearbeitungsverlauf von Postsendungen eingeliefert,
- auf der Oberfläche der Postsendung (1) befindliche graphische Informationen werden an einer Bearbeitungseinheit (4) erfasst,
- ein Datensatz mit Daten zur Identifizierung der Postsendung (1), insbesondere mit einer Sendungsnummer, wird unter Berücksichtigung der an der Bearbeitungseinheit (4) erfassten Informationen angelegt oder verändert,
- der Datensatz mit den Daten zur Identifizierung der Postsendung wird mit den auf der Oberfläche der Postsendung befindlichen erfassten graphischen Informationen auf einer Serverplattform (5) hinterlegt, und der Datensatz oder Teile davon werden einem Nutzer (6, 10) und/oder einer Datenverarbeitungseinheit zur Verfügung gestellt.

2. Verfahren nach Anspruch 1,
**dadurch gekennzeichnet,**
**dass** der Datensatz mit den Daten zur Identifizierung der Postsendung bei Einlieferung der Postsendung in dem Bearbeitungsvedauf angelegt oder verändert wird.

3. Verfahren nach einem der Ansprüche 1 oder 2,
**dadurch gekennzeichnet,**
**dass** der Datensatz mit den Daten zur Identifizierung der Postsendung in einer Bearbeitungseinheit für Postsendungen angelegt oder verändert wird.

4. Verfahren nach einem der vorhergehenden Ansprüche,
**dadurch gekennzeichnet,**
**dass** der Datensatz oder Teile davon dem Nutzer (6) über eine webbasierte Serverplattform (5) zur Verfügung gestellt wird.

5. Verfahren nach einem der vorhergehenden Ansprüche,
**dadurch gekennzeichnet,**
**dass** der Datensatz oder Teile davon gegebenenfalls in ein anderes Format umgewandelt und dem Nutzer (10) über eine elektronische Benachrichtigung zur Verfügung gestellt werden.

6. Verfahren nach einem der vorhergehenden Ansprüche,
**dadurch gekennzeichnet,**
**dass** der Datensatz oder Teile davon codiert werden und für den Nutzer (6, 10) decodierbar sind.

7. Verfahren nach einem der vorhergehenden Ansprüche,
**dadurch gekennzeichnet,**
**dass** der Datensatz oder Teile davon dem Nutzer (6, 10) in einem Report und/oder einer Auswertung zur Verfügung gestellt werden.

8. Verfahren nach einem der vorhergehenden Ansprüche,
**dadurch gekennzeichnet,**
**dass** der Datensatz Daten zum Status der Postsendung (1), beginnend mit der Entgegennahme der Postsendung (1) an der Empfangsstation (3), umfasst, die von einer weiteren Bearbeitungseinheit (7) aus verändert, insbesondere aktualisiert werden.

9. Verfahren nach einem der vorhergehenden Ansprüche,
**dadurch gekennzeichnet,**
**dass** die graphischen Informationen zu Daten eines Adressaten (vorgesehene Empfänger) der Postsendung (1) umfassen.

10. Verfahren nach einem der vorhergehenden Ansprüche,
**dadurch gekennzeichnet,**
**dass** die graphischen Informationen mittels einer Einrichtung zum Scannen (8) erfasst werden.

11. Verfahren nach einem der vorhergehenden Ansprüche,
**dadurch gekennzeichnet,**
**dass** die auf der Oberfläche der Postsendung (1) befindlichen und an der Bearbeitungseinheit (4) erfassten graphischen Informationen von einer Bildverarbeitungseinrichtung (9) dahingehend untersucht werden, ob die erfassten graphischen Informationen von vorgegebenen graphischen Informationen abweichen und dass für den Fall einer Abweichung eine Benachrichtigung am Nutzerterminal (2) und/oder der Bearbeitungseinheit (4) generiert wird.

12. Netzwerkknoten,
**dadurch gekennzeichnet,**
• **dass** er mindestens ein Mittel zum Empfangen eines Datensatzes mit Daten zur Identifizierung einer Postsendung aufweist,
• **dass** er mit einem Mittel zum Speichern des Datensatzes zusammenwirkt und dass er mit einer Serverplattform zusammenwirken kann, die den Datensatz oder wenigstens einen Teil davon einem Nutzer (6,10) zur Verfügung stellen kann.

13. System zum Bearbeiten einer Postsendung mit folgenden Komponenten:
- einer Empfangsstation (3) zur Entgegennahme der Postsendung (1),
- einer Bearbeitungseinheit (4) zur Erfassung von auf der Postsendung (1) befindlichen graphischen Informationen,
- einer Serverplattform (5) zum Hinterlegen des Datensatzes mit den Daten zur Identifizierung der Postsendung (1) und mit den auf der Postsendung (1) befindlichen erfassten graphischen Informationen, die mit dem Nutzerterminal (2) und der Bearbeitungseinheit (4) verbunden ist und einem Nutzer (6, 10) Daten und/oder Informationen des Datensatzes zur Verfügung stellt.
